# EUROPEAN PATENT APPLICATION

(11) **EP 2 712 846 A1**
(43) Date of publication of application: **02.04.2014**
(21) Application number: 13186305.2
(22) Date of filing: 27.09.2013
(51) Int. Cl.: C02F 1/74, B01D 17/02, E03D 11/06

(54) **Device and method for water treatment**

(30) Priority: 28.09.2012 IT TO20120852
(71) Applicant: Magi, Bruno, 61020 Monticchio S.Angelo in Lizzola (IT)
(72) Inventor: Magi, Bruno, 61020 Monticchio S.Angelo in Lizzola (IT)
(74) Representative: Ausserer, Anton

(57) **Abstract**

A water treatment device comprising a bell (14) having an opening oriented towards a lower end of a container or basin, and an exhaust conduit (16) for the treated water; said bell (14) is conceived for retaining an air pocket so as to allow the oxygenation of said water. The present invention further concerns a water treatment method, comprising a step of positioning of the pot (14) at a predetermined depth with respect to the level of the water inside the container or basin and a step of oxygenation of the water performed through a slow flow.

## Description

### Background technique.

The present invention refers to a water treatment device.

### Background art.

It is known that for reaching and keeping an adequate quality of the water, it is important to consider the amount of oxygen dissolved in the water. In particular, in absence of considerable phenomena of pollution, the water has typically a sufficient amount of dissolved oxygen. Unless the water is de-bacterized, thanks to the dissolved oxygen a biological activity - automatically balanced - occurs thanks to aerobic bacteria that degrade the natural organic components. Substantially, the concentration of oxygen dissolved in water is the result of a first plurality of biological processes that tend to increase the concentration (for example, the atmospheric re-aeration), and of a second plurality of processes that, in contrast, tend to decrease the concentration thereof, i.e. by consuming the oxygen that is present in the water.

The treatment of the waters has always been object of studies; waters in fact often have impurities of physical or chemical type that shall be eliminated or reduced below predetermined thresholds according to the following destination of the water to be purified.

In particular, the addition of biodegradable substance from the outside (civil, industrial or agricultural waste waters) causes an intensification of the bacterial activity with a consequent higher consumption of the oxygen dissolved in the water. The concentration of dissolved oxygen, therefore, tends to decrease with the incrementation of the bacterial activity.

Should said concentration not being restored through water re-oxygenation processes, the water environment becomes anoxic and, through the stop of the metabolic aerobic processes, new anaerobic processes occur with the release of toxic or anyway unpleasantly smelling chemical compounds, with detrimental results according to the hygienic-sanitary point of view, and in general for the surrounding environment.

It shall be noted that the processes of reduction of the concentration of dissolved oxygen, not only derive from civil installations or contaminants, but also from industrial ones. Actually, there are productive cycles that exploit the recycling of water also in the industrial field, and also in this case are known many phenomena of quick decrease of the water quality measured in terms of concentration of dissolved oxygen.

There are known water purification devices that present inside them additives or chemical agents capable of enhancing the physical characteristics of the waters for transforming the dirt water for example in drinking water.

Anyway, these devices are characterized by the drawback of having a periodic dosage of the additive or chemical agent for keeping their effectiveness, and separating in a second time the precipitations that are formed.

Further water purification devices are provided with ultra-filtration systems, in which substantially the water passes inside a membrane filter through the inlet pressure upstream; anyway, said systems are characterized by a considerable cost, fragility, a low obtainable flow of purified water and the compulsory need of an efficient maintenance.

Further methods that are used for the oxygenation of waters are based on mechanical systems that transfer air inside the mass of the water.

For example said methods imply the use of turbines - positioned on the surface or even submerged - or blowers that through diffusers placed at the bottom of oxygenation basins, make water gurgle in very small bubbles. Said bubbles tend to rise up to the surface, therefore making the time interval of oxygen interchange with water extremely low.

So, the known systems not only need a great apportion of air, but also require a significant energetic provision; therefore, they are convenient only when the amounts of water to be treated are considerable and the process shall be actually fast. Said systems are therefore mainly used for industrial use.

The purpose of the present invention is to realize a water treatment device that solves at least partially the aforementioned drawbacks, being particularly recommendable for modest hourly flows.

### Summary of the invention

According to the present invention a water treatment device is provided, said waters being contained in a container or external reservoir susceptible to contain liquids inside ; said device comprising a exhaust conduit for the extraction of the treated water; the water treatment device is **characterized in that** it comprises at least one oxygenation pot or bell, positioned inside the external container, having a first lower opening communicating with said external container and a second opening wherein are introduced said exhaust means, for the exit of fluids; said exhaust conduit protruding inside the bell for a height sufficient to keep an its terminal portion below an air pocket which is present in use in an upper zone of said pot.

Advantageously, said bell is positioned at a fixed height within said container or external reservoir.

Advantageously, there is a plurality of oxygenation bells positioned at an equal height inside said external container, and wherein each of said bells of said plurality of bells comprises a respective exhaust conduit connected to a common treated water collection conduit.

Advantageously, said device comprises emptying means of said external container positioned in correspondence of a lower portion of said external container.

Advantageously, it further comprises means of reintroduction of air inside of said basin.

The aforementioned device further comprises at least one floating parts elimination conduit, positioned in correspondence of an upper portion of said external container in correspondence of a height reached by the liquid contained in use within said container.

Said device can be advantageously produced with a plurality of stages as above described.

Advantageously, said first opening is directed towards the lower end of said container or basin.

Advantageously, it is further present an inlet conduit for the waters to be treated rigidly fixed and hydraulically sealed on said external container.

Advantageously, there are further present fixing means of the pot within said reservoir, said reservoir being pre-existing.

Advantageously, said container is realized in a corrosion free matter.

According to the present invention it is also described a method of treatment of waters, **characterized in that** it comprises a step of positioning a water oxygenation pot or bell inside a basin or container at a predetermined depth with respect to a height reached by the water to be treated inside said container, such as to have a partial fulfillment of said pot or bell and an air bubble positioned over the water partially filling the pot or bell and a following step of extraction of said water from said basin through an exhaust conduit preemptively positioned inside said reservoir so as to have a respective opening positioned below the height reached by said water inside said pot or basin; said method further comprising a step of oxygenation of said water by means of a passage from said reservoir or container to said pot.

Advantageously, said step of oxygenation occurs with a slow water flow.

Advantageously, said method comprises a step of progressive replenishment of said container or basin from the bottom to the upper part, said step of progressive replenishment causing the formation of said air bubble inside said basin or bell.

Advantageously, said method comprises a step of adaptation of the depth of said pot or bell according to the level of said water inside said container or reservoir.

### Description of the figures.

Further features and advantages of the water treatment device will result from the description hereinafter presented that represents an example of preferred and non-limiting embodiment with reference to the annexed drawings. In detail:
- figure 1 shows a first embodiment of water treatment device;
- figure 2 shows a second embodiment of the water treatment device;
- figure 3 shows a third embodiment of the water treatment device;
- figure 4 shows a cascade system of water treatment devices according to the present invention.

### Detailed description of the invention.

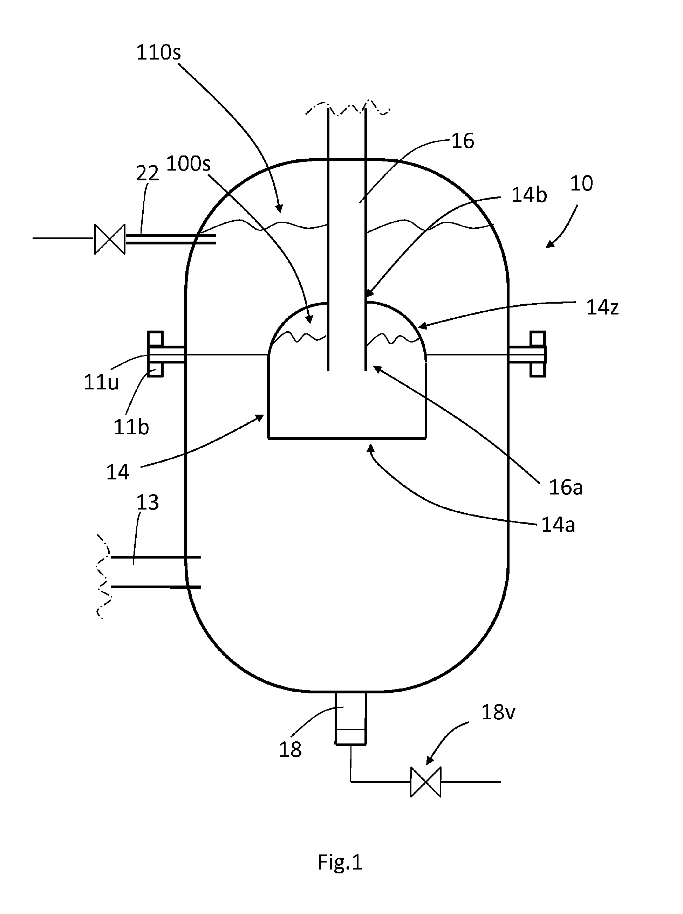

As shown in figure 1, with reference number 10 is indicated in its entirety a water treatment device in an his first embodiment.

The device 10 comprises an external container 11 susceptible of containing liquids and more in detail the water that is introduced inside the device to be purified and oxygenated. The external container 11 is provided with an inside container or pot 14 being shaped as a bell that presents itself with a direction of principal opening substantially upturned downwards, for the oxygenation of the water; said bell presents a first opening 14a directed towards the bottom of the external container 11 and a second opening 14b, in a position substantially opposed to the first one, wherein it is hydraulically sealed introduced an exhaust conduit 16 of treated water. The exhaust conduit of the clean water protrudes upwards to exit from the external container 11 in correspondence of its top; in this case the junction between the top of the external container 11 and the exhaust conduit 16 is hydraulically sealed.

Preferably, even though in a non-limiting way, the external container 11 is realized in metal or even plastic matter, such as to prevent corrosion phenomena. Said metal matter can be conveniently inox steel.

Conveniently, the external container 11 can be realized in two divisible portions, whereof an upper first and a lower second; preferably the two portions are joined by respective union means 11u, that in figure 1 are shown as flangings.

The union means 11u are retained by blocking means 11b (for example and in a non-limiting way bolts placed all around the perimeter of the flanging).

The water to be purified is introduced into the external container 11 through inlet means 12, that in the first embodiment shown in figure 1, are exemplified with an inlet conduit 13, eventually provided with an inlet valve.

In the first embodiment the inlet conduit is positioned in a lower zone of the external container 11, so as to be - when in use - completely covered by the water present in the external container for a predetermined depth; more in detail, the inlet conduit finds itself below the minimum height Q1, measured from the bottom of the external conduit 11, reached by the lower portion of the pot 14. The external container 11 presents in addition an emptying conduit 18, having a respective valve 18a. The emptying conduit 18 is preferably positioned in the lower portion of the external container 11, and in detail is placed in its lowest portion; preferably, in fact, the bottom of the external container 11 is bulged or conic, and substantially has a profile which is convex towards the outside of the external container itself; therefore, there is a zone that in use is at a minimum height with respect to the ground and wherein the residues of the water to be purified typically concentrate for precipitation or for gravity an the emptying conduit 18 results ideally placed exactly at the vertex of said cone. The purpose of the emptying conduit 18 is actually to allow the periodic exit of the sediments introduce in the external container 11 by the dirt water introduced by the inlet conduit 13 or those that are formed following the oxidation of the water (for example and in a non-limiting way, iron oxides). In addition to the emptying conduit can be associated a valve 18v manually or automatically operated, in this last case operable through a timer.

In use, inside the bell 14, creates an air pocket that rests positioned in its upper zone 14z.

In fact, the exhaust conduit 16 of the purified water, protrudes inside the bell 14 for a second depth Q2, measured from the top of the bell 14 itself, such as to have an own end 16a positioned below the air pocket or bubble and, consequently, being constantly submerged inside the liquid.

When the device object of the present invention is filled up, the water entering from the inlet conduit 13 little by little starts to fill the external container 11 up to the point allowed by the pressure of the air pocket 110s that creates in its upper zone; as the water level rises, the water reaches the lower end 16a of the exhaust conduit 16, and there starts its rising, trapping therefore an air bubble in the end of the bell 14 whose height is higher than the end16a of the exhaust conduit. The air 100s inside said portion of the pot 14, since the junction between the second opening 14b and the exhaust conduit 16 is realized with hydraulic sealing, cannot exit and rests trapped and available for the oxygenation process.

Outside the bell 14, the water continues to fill the external container 11 up to a point wherein it results substantially full, with the exclusion of a minimal air pocket 110s that is present in its peripheral upper zone.

Inside the pot or bell 14, the air results therefore exposed to the pressure generated by the water head over the basin itself and, if present, the pressure of the water feeding circuit through the inlet conduit 13.

In the air-water interface inside the bell 14 takes place the absorption of the oxygen by the water, therefore allowing the oxygenation. The pressure which is present in the air bubble increases the dissolution of air/oxygen in the surrounding liquid mass.

In fact, the device object of the present invention provides a predetermined amount of air (and therefore, of oxygen) inside the volume of water to be treated that is contained in the bell 14. Its configuration is such as in the pot or bell 14 the air pocket is constantly kept at a predetermined depth, without parts in motion. The air, that cannot rise to the top, can provide all the provision of oxygen present therein for a time that is very long if compared with the one that would be if a bubble is made transit from the lower portion of the external container 11 to its upper one.

In the interface zone between the surface of the water inside the pot 14 and the air bubble 100s creates a water oxygen absorption process that once passed the interface air-water, tends to diffuse. The water below the pot or bell 14, will tend therefore to assume a higher quantity of dissolved oxygen if compared to the zone outside or more distant from the bell 14, and therefore will tend to spontaneously diffuse in the surrounding zone, outside the bell itself. Said diffusion is proportional to at least the following factors: the area of the section defined by the dimension of the lower opening 14a of the bell 14; the coefficient of diffusion, that is a value typical of the diffusing fluid and that expresses the speed with which the diffusable molecules can move in the diffusion mean; and the concentration gradient that finally represents the difference of concentration of dissolved oxygen in the water in the various areas. With the motion of a molecule according to the gradient, energy is provided for the motion of another molecule in the opposed direction with respect to the gradient.

If the device object of the present invention is fed with pressurized water, the amount of oxygen which is transferred to the liquid is higher, since the solubility of a gas proportionally rises with the pressure according to Henry's law.

The device object of the present invention, in an its simplified embodiment, ca also be installed inside concrete pots or basins or reservoirs 30 of preexisting type.

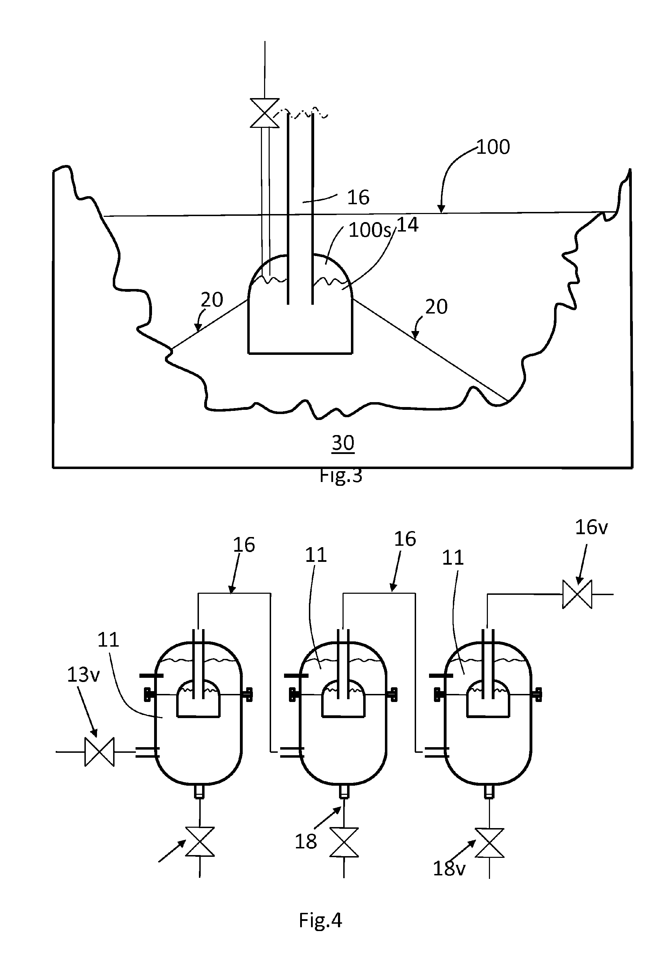

In that case the device object of the present invention, as shown in figure 3, comprises one or more pots or bells 14 for water purification and/or oxygenation and retaining and/or ballast means in depth placed 20, configured to rigidly connect themselves on said preexisting reservoir 3, so as to keep the bell 14 at a fixed depth and, consequently, keep the created air pocket at a fixed depth with respect to the surface of the water 100.

Preferably said retention means comprise ropes directly anchored at the bottom of the reservoir 30 or alternatively being ballasted.

The retention means can comprise alternatively also bows conveniently anchored at the borders of the concrete pot, that are susceptible of modifying their height with respect to the bottom of the pot according to the height reached by the reservoir. Any technically equivalent alternative to a bow is susceptible to be exchangeable with the same for performing the technical function of repositioning the bell at a new height with respect to the bottom of the basin, height that shall anyway correspond to an equivalent depth with respect to the surface of the water. In such a way it would be possible that at the variation of the height of the reservoir, also the height of the pot 14 variates for an equivalent height. Advantageously, in this way, the pressure to which is exposed the air pocket inside the bell 14 rests constant independently from the form of the reservoir.

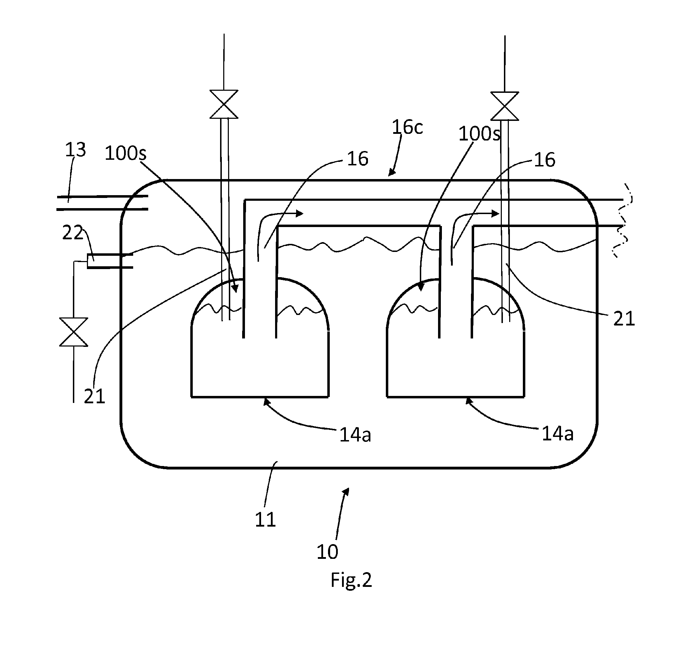

A further embodiment of the device according to the present invention is shown in figure 2. The embodiment shown therein, differentiates itself from the first one by the fact that the external container 11 presents in it a plurality of bells 14 of water purification and oxygenation of the water provided by the inlet conduit 13, that this time finds over the height of the water surface. In this case, clearly, the external container 11 presents an elongated form, so as to have all the bells 14 at an equivalent height with respect to its bottom. Each of the bells 14 presents as always a first opening into which is introduced a purified water exhaust conduit 16, and a second opening 14a directed downwards. All the exhaust conduits 16 of each bell 14 present an opening 16a positioned at an equivalent height with respect to the bottom of the external container.

In the embodiment shown in figure 2 is also present an air reintroduction conduit 21, that possesses a first end opened inside the pot 14, and a second end that is conveniently fed by air feeding means and that is periodically fed from the outside of the pot itself.

Advantageously, this allows to reintroduce new air inside the pot 14, enhancing the oxygenation characteristics of the water in case the air inside the pot, following the interchange of oxygen with the water, decreases below a level of oxygen suitable to guarantee the correct operation of the device.

Through the air reintroduction conduit 21, it is not necessary to provide for the emptying of the external container 11 for having an air exchange inside the pot 14. The air reintroduction conduit 21 can equivalently be installed in the embodiment with single pot shown in figure 1.

In addition, each of the exhaust conduits 16, that are positioned substantially in vertical direction, unifies with a common exhaust conduit 16c, that acts as exhaust collector joined to the ends of the exhaust conduits opposed to the openings 16a. In detail, the common exhaust conduit 16c is orthogonally oriented with respect to the exhaust conduits 16 of each pot 14.

The present embodiment allows to realize a device that, with an equal waters oxygenation capacity, with respect to the embodiment with a single pot 14, guarantees more flow rate. Moreover, in case there are geometry problems deriving from the transverse size (in depth) of the device with a single pot, the embodiment above described allows to realize a device that even if larger presents less deep pots, advantageously compensating the lack of depth of a pot or bell 14 with a duplication of the number of the pots themselves.

As in the case of the single pot embodiment, the third embodiment of the device object of the present invention is provided with an emptying conduit positioned at the bottom of the external container 11.

Both the first and the third embodiment of the water treating device object of the present invention can present some optional features targeted to increase its functionality.

A further optional feature of the device object of the present invention, illustrated in figure 1, is also to have an oil extraction conduit 22, the terminal portion 22a thereof is positioned in correspondence of the surface of the water inside the container 11; since the oils tend to rest in correspondence of the surface of the water, they can be advantageously extracted without incurring in the risk of having a progressive accumulation of them, by increasing their layer downwards, that contaminates the portion of liquid that is present inside the bell 14. The oil extraction conduit 22 is provided with a closure valve.

In any case, independently from the presence or not of the oil extraction conduit, the fact of having a bell 14 positioned at a height considerably lower than the water surface inside the container 11, permits that the treated water is as much as possible separated yet in origin from the oils.

When the water purification process is ended, or, alternatively, when it is reached a predetermined maintenance interval, it is possible to dump the residues present in the water to be purified that in the meantime have been collected at the bottom of the external container 11 through the emptying means 13, in detail by opening the valve 13. The cycle of purification can therefore newly start.

A further embodiment of the water treatment device is **characterized in that** it is multistage. Substantially, said embodiment is the result of an in-series combination of a plurality of water treatment devices according to the first or third embodiment, in contrast with the previous solution where the bells were substantially arranged in parallel. Substantially, as schematically shown in figure 4, the exit of the first stage represented by the clean water exhaust conduit 16 re-enters in the second stage as an inlet conduit 13, and so on. Conveniently, in figure 4 are illustrated also the inlet valves 13v and the outlet ones 16v optionally present on the device.

Advantageously, therefore, the third embodiment allows to more oxygenate the flowing water. So it can be used to increase the flow rate of purified water and/or to increase the oxygenation process with respect to the first embodiment and to be advantageously usable for oxygenating and purifying also the dirtiest waters. In particular, the water flow rate of the third embodiment can be increased with respect to the first since the device object of the present invention is conceived to operate with water flows of reduced entity, so as to let sufficient time to the water present in the pot or bell 14 for the oxygenation. But increasing the water flow speed, the efficiency of oxygenation decreases, and is re-established through a plurality of stages in series.

For this reason the water treatment device is particularly useful for oxygenating the water and for obtaining the separation of the oil from the water. Therefore, said embodiment becomes important for industrial use, wherein the waters following their exploitation inside the enterprise, present oil residues that shall be eliminated before the reintroduction, for instance, in the rivers, having been subjected to a process of reestablishment of the aerobic processes. At the end of the water purification process, the external container 11 can be emptied and all the oily sediments that are already deposited in correspondence of an its lower zone will be extracted inside the container itself thanks to the emptying conduit.

In all the embodiments herein described, the pressures of the water can be varied according to the searched results in a continuous or pulsated way.

The advantages of the device according to the present invention are clear from the above description: it allows to purify water from solid or fluid residuals without the addition of chemical additives but only through a gravimetric separation or deriving from the path and interchange with the air. In addition, it can perform a combined action of the two previous typologies of purification through the oxygenation of the water.

The device object of the present invention does not present electric parts susceptible of consuming electric current, and therefore is advantageously usable in all those situations wherein the presence of electric power is difficult or dangerous, or even completely absent. Examples of said places can be the rooms of industrial plants in which the ambient atmosphere presents risks of explosion.

In addition, the device according to the present invention does not necessitate mechanical parts in motion, and this significantly simplifies its production, thereby reducing the production cost.

Due to the fact that the water treatment device is preferably usable for low flow rates, and is substantially economic producible, it can be advantageously used in civil installations, for example for domestic or house application.

The device 10 object of the present invention, in each embodiment described and represented, does not impede the association with further conventional purification devices: it allows these ones to operate in better conditions, particularly when they are placed downstream. This since the water arrives to them in cleaner conditions.

It is finally clear that even if for the embodiments of the device object of the present invention it has been discussed of oils in general terms, these can equivalently provide for the separation of polluting agents or residuals having a different density with respect to the water, being therefore confined in an upper layer.

Some typical applications of the device object of the present invention are for instance: oxidation of the iron dissolved in water, limitation of the bacterial proliferation in the domestic water conduits, not only for sewage, but also as an inlet placed upstream the taps, for instance in proximity of the autoclave. And also, the device object of the present invention is usable for enhancing the functioning of membrane filtering systems (inverse osmosis) and for the micro flocculation of organic substances suspended in the water. In addition, it can be used for avoiding the detriment of the waters in the accumulation reservoirs.

In the field of sewage waters, the device according to the present invention, in addition to the separation of oils and greases, can be used for the maintenance of the biochemical stability of the lubricating-refrigerating fluids and washing solutions, and even for the biologic oxidation of civil and industrial waste waters, and for avoiding the occurrence of anaerobic processes in the water accumulation and/or pre-treatment reservoirs.

Modifications, variants, additions obvious for a technician expert in the art can be made to the device according to the present invention without departing from the scope of protection provided by the annexed claims.

## Claims

1. A water treatment device, said waters being contained in an external container or basin (11; 20) susceptible of containing liquids inside; said device (10) comprising an exhaust conduit (16) for the extraction of the treated water; the water treatment device (10) is **characterized in that** it comprises at least a pot or bell (14) of oxygenation, positioned inside the external container (11), having a first lower opening (14a) communicating with said external container (11) and a second opening wherein said exhaust means (16) are introduced for extracting fluids; said exhaust conduit (16) extending inside the pot (14) for a depth sufficient to keep an its terminal position (16a) below an air pocket present in use in an upper zone of said pot (14).

2. A device according to claim 1, wherein said pot is positioned at a fixed height inside said container or external basin (11; 20).

3. A device according to any of the preceding claims, comprising a plurality of oxygenation pots (14) positioned at an equal height inside said external container (11), and wherein each of the pots of said plurality of pots (14) comprises a respective exhaust conduit (16) connected to a common collection conduit of the treated water.

4. A device according to claim 1, comprising emptying means (18) of said external container (11) positioned in correspondence of a lower portion of said external container (11).

5. A device according to any of the preceding claims, further comprising air reintroduction means inside said pot (14).

6. A device according to any of the preceding claims, further comprising at least a slurries elimination conduit, positioned in correspondence of an upper zone of said external container (11) in correspondence of a height reached by the liquid contained in use inside said container.

7. A water treatment device, comprising a plurality of treatment stages according to any of claims 1-6.

8. A device according to any of the preceding claims, wherein said first opening (14a) is directed towards the lower end of said container or basin (11).

9. A device according to claim 1, further comprising an inlet conduit (13) for the waters to be treated rigidly fixed with hydraulic sealing on said external container (11).

10. A device according to claim 1, further comprising retention means of said pot (14) inside said basin, said basin being pre-existing.

11. A device according to claim 1, realized in a corrosion free material.

12. A method of water treatment, **characterized in that** it comprises a step of positioning a water oxygenation pot (14) inside a basin or container (11; 20) at a predetermined depth with respect to a height reached by the water to be treated inside said container, such as to have a partial replenishment of said pot (14) and an air bubble positioned over the water partially filling said pot, and a following step of extraction of said water from said pot (14) through an exhaust conduit (16) preemptively positioned inside said pot in such a way to have a respective opening (16a) positioned below the height reached by said water into said pot or basin; said method further comprising a step of oxygenation of said water through a passage from said basin or container to said pot (14).

13. A method according to claim 12, wherein said step of oxygenation happens with a slow water flow.

14. A method according to any of the preceding claims 12-13, comprising a step of progressive filling of said container or basin from the bottom upwards, said step of progressive filling causing the formation of said air bubble inside said pot (14).

15. A method according to any of the preceding claims 12-14, comprising a step of adaptation of the depth of said pot (14) according to the level of said water inside said container or basin.
